# FASCICULE DE BREVET EUROPEEN

(11) **EP 1 871 272 B1**
(45) Date de publication et mention de la délivrance du brevet: **02.12.2009**
(21) Numéro de dépôt: 06709061.3
(22) Date de dépôt: 11.01.2006
(51) Int. Cl.: A61C 1/14

(54) **DISPOSITIF D'ACCROCHAGE D'UN INSTRUMENT DENTAIRE SUR UNE PIÈCE À MAIN FORMÉ D'UN ENSEMBLE AXE TOURNANT, RESSORT D'ACCROCHAGE ET BOUTON POUSSOIR**
VORRICHTUNG ZUR ARRETIERUNG EINES ZAHNMEDIZINISCHEN INSTRUMENTS AN EINEM HANDSTÜCK AUS EINER ANORDNUNG MIT ROTIERENDER SPINDEL, ARRETIERUNGSFEDER UND DRUCKTASTE
DEVICE FOR LOCKING A DENTAL INSTRUMENT ON A HANDPIECE CONSISTING OF A ROTATING SPINDLE, LOCKING SPRING AND PUSH-BUTTON ASSEMBLY

(30) Priorité: 14.03.2005 FR 0502464
(43) Date de publication de la demande: 02.01.2008
(73) Titulaire: MICRO MEGA INTERNATIONAL MANUFACTURES, 25000 Besançon (FR)
(72) Inventeur: BOINOT, Jean-Claude, F-25640 Rigney (FR)
(74) Mandataire: Poupon, Michel
(86) Numéro de dépôt international: PCT/FR2006/000050
(87) Numéro de publication internationale: WO 2006/097587

(56) Documents cités:
- FR-A- 891 672
- US-A- 4 370 132

## Description

La présente invention concerne un nouveau dispositif d'accrochage d'un instrument dentaire, comme décrit dans FR-A-891672.

Un but de l'invention est de permettre l'accrochage d'un instrument, sur les organes d'entraînement de la tête d'une pièce à main dentaire, sans nécessiter l'utilisation d'outils particuliers, et en utilisant un système à ressort simple à mettre en oeuvre.

Ce but est atteint par un dispositif d'accrochage d'un instrument dentaire comme défini dans la revendication 1, du type comportant un corps portant intérieurement des organes de motorisation et/ou des organes de transmission de mouvement, et une tête porte-outil, ledit dispositif se composant d'un axe tournant, d'un ressort d'accrochage, et d'un bouton poussoir :
- l'axe tournant étant formé d'un axe creux prévu pour s'engrener avec les organes de transmission de mouvement de la pièce à main et étant traversé longitudinalement par un alésage central débouchant, prévu pour accueillir la tête d'un instrument,
- le ressort d'accrochage étant formé d'un anneau inférieur se positionnant autour de l'axe creux et se prolongeant d'un même côté par deux bras, ou une pluralité de bras élastiques, chacun muni d'un ergot et présentant chacun une position de repos selon laquelle l'ergot s'engage dans une gorge annulaire prévue sur la tête de l'instrument, et une position écartée selon laquelle l'ergot est éloigné de l'axe central en vue de son désengagement,
- le bouton poussoir en forme de chapeau comportant en sous-face une tête de pression centrale et conique dont la pente extérieure est apte, lors d'une pression de l'utilisateur sur le bouton poussoir en direction de l'instrument, à écarter radialement les bras du ressort d'accrochage pour désengager les ergots de la gorge annulaire de l'instrument.

En outre, les bras d'accrochage se logent dans des fentes prévues dans l'axe tournant pour bloquer en rotation le ressort par rapport à l'axe tournant, le ressort étant par ailleurs maintenu axialement entre le bouton poussoir et un épaulement de l'axe tournant.

On comprendra mieux l'invention à l'aide de la description ci-après faite en référence aux figures annexées suivantes :
- Figure 1 : vue en coupe longitudinale d'une pièce à main pour travail d'endodontie, équipée d'un dispositif d'accrochage à ressort selon l'invention.
- Figure 2 : vue en coupe longitudinale du dispositif d'accrochage selon l'invention.
- Figure 3 : vue de côté de l'axe tournant du dispositif d'accrochage des figures 1 et 2, équipé d'un ressort selon l'invention.
- Figure 4 : vue en coupe selon A-A de la figure 3.
- Figure 5 : vue d'ensemble de l'axe tournant de la figure 3.
- Figures 6, 7 et 8 : respectivement vues de côté, vue en coupe selon B-B, vue de dessous du ressort des figures 1 à 4.
- Figure 9 : vue de côté de la tige d'un instrument prévu pour coopérer avec le dispositif d'accrochage selon l'invention.
- Figures 10 et 11 : vue en coupe longitudinale et en coupe selon C-C, montrant un instrument engagé dans un dispositif d'accrochage selon l'invention.

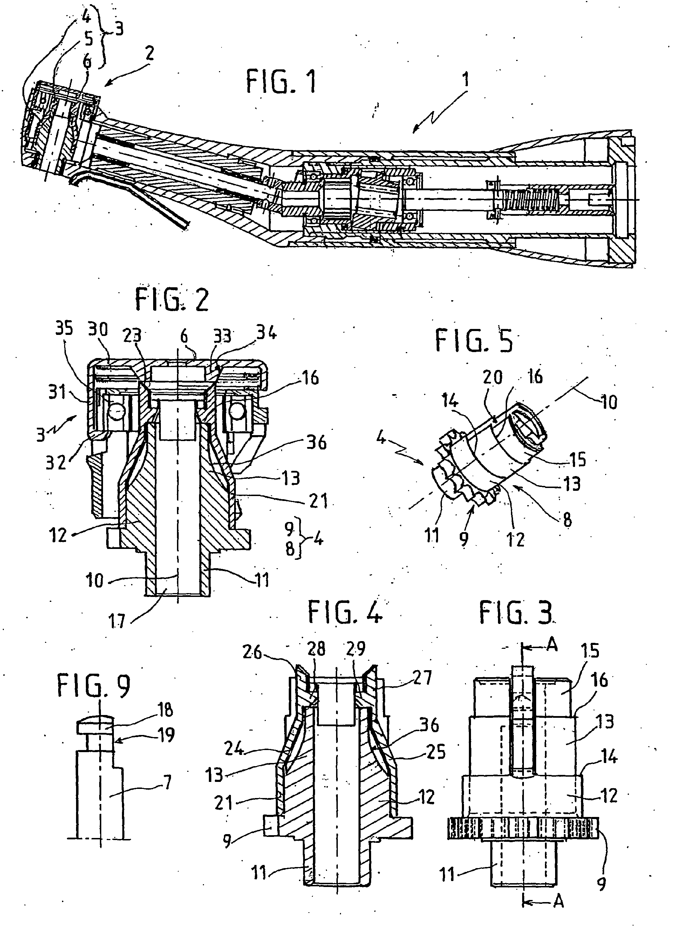

La figure 1 montre un instrument dentaire comportant un corps (1) portant intérieurement des organes de motorisation et/ou des organes de transmission de mouvement (classiques et non détaillés ici), et une tête porte-outil (2).

La tête (2) présente un dispositif d'accrochage (3) selon l'invention composé d'un axe tournant (4), d'un ressort d'accrochage (5), et d'un bouton poussoir (6), (voir figure 1 et 2 notamment) et elle est conçue pour coopérer avec un outil dont la tige (7) est du type de celle représentée aux figures 9 à 11.

L'axe tournant (4) présent sur les figures 1 à 8, est formé d'un axe creux (8) portant perpendiculairement à son axe central (10), un pignon (9) prévu pour s'engrener classiquement avec les organes de transmission de mouvement de la pièce à main.

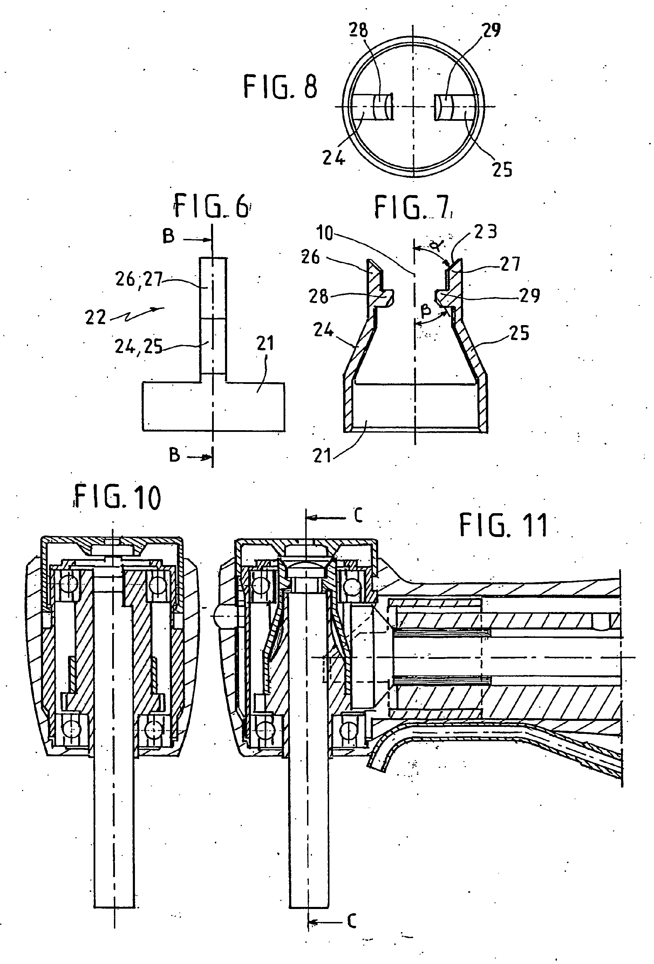

L'axe creux (8) est prolongé, en sous face du pignon (9), par un manchon cylindrique (11) prévu pour coopérer classiquement avec un roulement (figures 10, 11) ou un palier (figure 1).

L'axe creux (8), au-dessus du pignon (9), (voir figures 5 et 2), présente une partie basse cylindrique (12), suivie vers le haut, d'une partie centrale (13) de plus faible diamètre que la partie basse et séparée de celle-ci par un épaulement périphérique (14), puis d'une partie haute cylindrique (15) de plus faible diamètre que la partie centrale (13) et séparée de celle-ci par un épaulement périphérique (16).

L'axe creux (8) est traversé longitudinalement par un alésage central (17) débouchant, accueillant la tige (7) dont la tête est équipée classiquement d'une gorge annulaire (18) pour un blocage axial grâce aux ergots, et d'un méplat (19) parallèle à l'axe longitudinal de la tige pour un blocage en rotation réalisé par un méplat correspondant de l'axe creux.

L'axe creux comporte sur ses parties haute et centrale une fente (20). Ladite fente (20) traverse diamétralement la partie haute (15) et l'alésage central (17), et débouche extérieurement de chaque côté. Cette fente se prolonge vers le bas, par deux découpes débouchant extérieurement et sur toute la hauteur de la partie centrale (13), de même largeur que la fente, et dont le fond présente un profil cintré concave (36) visible en figure 4.

Le ressort (5), (voir figures 6 à 8), est formé d'un anneau inférieur (21) portant d'un même côté deux bras élastiques (22) diamétralement opposés ou plusieurs bras répartis régulièrement sur la périphérie dudit anneau.

Chaque bras comporte, à partir de l'anneau, un segment central incliné (24) ou (25) en direction de l'axe central (10), terminé par un segment supérieur (26) ou (27) parallèle audit axe (10), chacun terminé par une pente interne (23) inclinée d'un angle α vers le haut (45° par exemple, voir figure 7). Chaque segment supérieur (26) ou (27) porte, en direction de l'axe central (10), un ergot transversal (28) ou (29) prévu pour s'encliqueter dans la gorge annulaire (18) de la tige de l'instrument (voir montage en figure 4 ou 10 et 11), et comportant un plan (37) incliné vers le bas, d'un angle (β), (30° par exemple, voir figure 7).

L'anneau (21) se positionne et s'applique autour de la partie basse (12) de l'axe creux (figure 2), les segments inclinés (24, 25) se placent extérieurement à la partie centrale (13) dudit axe creux sans entrer en contact avec elle, en raison de son profil concave (36), tandis que les segments (26) et (27) viennent se loger dans la fente (20) de la partie haute (15) de l'axe creux, et que les ergots (29) viennent s'incliner dans la gorge (18) de l'instrument (figures 9, 10, 11).

Le bouton poussoir (6) selon la variante des figures 1 et 2, est classiquement en forme de chapeau avec une face plane circulaire (30) pourvue d'une jupe périphérique annulaire d'axe (31), bordée par une collerette (32) perpendiculaire et dirigée vers l'axe (10), de façon à s'accrocher par exemple sous un roulement (35) de la tête (2), et servir de butée axiale haute pour le bouton poussoir.

Ledit bouton poussoir comporte en sous face une tête de pression (33) centrale, conique dont la pente extérieure (34) est apte, lors d'une pression sur la face (30) en direction de l'instrument, à s'engager entre les deux segments (26, 27) du ressort, par glissement sur les deux plans inclinés intérieurs (23), et apte à écarter radialement vers l'extérieur lesdits segments afin de désengager les ergots (28, 29) de la gorge et de libérer l'instrument.

L'accrochage d'un instrument se fait par introduction et déplacement de la tête de l'outil dans l'alésage central (17) en direction du bouton poussoir. Les plans inclinés (37) des ergots (28, 29) favorisent le glissement de la tête de l'outil et l'écartement des ergots et des bras lors du passage de ladite tête, puis l'élasticité des bras permet leur retour en position de repos et d'encliquetage dans la gorge (20).

La variante des figures (10) et (11) montre que d'autres formes de réalisation sont possibles sans sortir du cadre de l'invention.

De même, il est possible de prévoir sur le ressort (5) trois ou quatre bras élastiques sans sortir du cadre de l'invention, l'axe creux comportera alors trois ou quatre fentes radiales réparties respectivement à 120° ou à 90°, ou deux fentes diamétrales perpendiculaires.

Le dispositif d'accrochage selon l'invention est simple à mettre en oeuvre et ne nécessite aucun outil spécifique pour mettre en place ou pour enlever l'instrument, et l'élément ressort est monté sur l'axe tournant sans nécessiter de fixation particulière.

## Revendications

1. Dispositif d'accrochage d'un instrument dentaire, du type comportant un corps (1) portant intérieurement des organes de motorisation et/ou des organes de transmission de mouvement, et une tête porte-outil (2), ledit dispositif se composant d'un axe tournant (4), d'un ressort d'accrochage (5), et d'un bouton poussoir (6) :
- l'axe tournant (4) étant formé d'un axe creux (8) prévu pour s'engrener avec les organes de transmission de mouvement de la pièce à main et étant traversé longitudinalement par un alésage central (17) débouchant, prévu pour accueillir la tête d'un instrument, l'axe tournant (4) étant formé d'un axe creux (8) portant perpendiculairement à son axe central (10), un pignon (9) prévu pour s'engrener classiquement avec les organes de transmission de mouvement de la pièce à main,
- le ressort d'accrochage (5) étant formé d'un anneau inférieur (21) se positionnant autour de l'axe creux et se prolongeant d'un même côté par deux bras ou une pluralité de bras élastiques, chacun muni d'un ergot et présentant chacun une position de repos selon laquelle l'ergot s'engage dans une gorge (20) annulaire prévue sur la tête de l'instrument, et une position écartée selon laquelle l'ergot est éloigné de l'axe central en vue de son désengagement,
- le bouton poussoir (6) en forme de chapeau comportant en sous-face une tête de pression (33) centrale et conique dont la pente extérieure est apte, lors d'une pression de l'utilisateur sur le bouton poussoir en direction de l'instrument, à écarter radialement les bras du ressort d'accrochage (5) pour désengager les ergots (28, 29) de la gorge annulaire de l'instrument.
- l'axe creux (8) est prolongé, en sous face du pignon (9), par un manchon cylindrique (11) prévu pour coopérer classiquement avec un roulement ou un palier,
**caractérisé en ce que :**
- l'axe creux (8) présente au-dessus du pignon (9), une partie basse cylindrique (12) suivie vers le haut, d'une partie centrale (13) de plus faible diamètre que la partie basse et séparée de celle-ci par un épaulement périphérique (14), puis d'une partie haute cylindrique (15) de plus faible diamètre que la partie centrale (14) et séparée de celle-ci par un épaulement périphérique (16),
- l'axe creux comporte sur ses parties hautes et centrales au moins une fente (20), ladite fente traversant diamétralement la partie haute (15) et l'alésage central (17), et débouchant extérieurement de chaque côté, cette fente se prolongeant vers le bas par deux découpes débouchant extérieurement et sur toute la largeur de la partie centrale (13), lesdites découpes étant de même largeur que la fente, et présentant un profil cintré concave (36),
- chaque bras du ressort comporte à partir de l'anneau, un segment central incliné (24) ou (25) en direction de l'axe central (10), terminé par un segment supérieur (26) ou (27) parallèle audit axe (10), chacun terminé par une pente interne (23) inclinée d'un angle (α) vers le haut.

2. Dispositif selon la revendication 1, **caractérisé en ce que** les bras d'accrochage se logent dans les fentes prévues dans l'axe tournant.

3. Dispositif selon l'une des revendications 1 à 2, **caractérisé en ce que** l'axe creux comporte sur ses parties haute et centrale trois ou quatre fentes radiales réparties respectivement à 120° ou à 90° pour coopérer avec un ressort comportant respectivement trois ou quatre bras.

4. Dispositif selon l'une des revendications 1 à 3, **caractérisé en ce que** chaque segment supérieur (26) ou (27) porte, en direction de l'axe central (10), un ergot transversal (28) ou (29) prévu pour s'encliqueter dans la gorge annulaire (18) de la tige de l'instrument, et comportant un plan incliné vers le bas (37) d'un angle (β).

5. Dispositif selon l'une des revendications 1 à 4, **caractérisé en ce que** le bouton poussoir présente une forme de chapeau avec une face plane circulaire (30) pourvue d'une jupe périphérique annulaire d'axe (31), bordée par une collerette (32) perpendiculaire et dirigée vers l'axe (10), de façon à s'accrocher par exemple sous un roulement (35) de la tête (2), et servir de butée axiale haute pour le bouton poussoir.

## Claims

1. A device for securing a dental instrument, of the type comprising a body (1) accommodating on the inside motorisation elements and/or movement-transmitting elements, and a tool-holder head (2), said device comprising a rotary spindle (4), a securing spring (5) and a push button (6):
- the rotary spindle (4) being formed by a hollow spindle (8) provided for meshing with the movement-transmitting elements of the handpiece and being traversed longitudinally by an open central bore (17) for receiving the head of an instrument, the rotary spindle (4) being formed by a hollow spindle (8) bearing perpendicular to its central axis (10) a pinion (9) provided for meshing classically with the movement-transmitting elements of the handpiece;
- the securing spring (5) being comprised of a lower ring (21) positioned around the hollow spindle and extending on a same side with two arms or a plurality of elastic arms, each arm being provided with a pin and each having a position of rest according to which the pin engages in an annular groove (20) provided on the head of the instrument, and a spaced-apart position according to which the pin is moved away from the central axis for the purpose of disengagement,
- the hat-shaped push-button (6) comprising, on an underside thereof, a central and conical pressure head (33) the external slope of which is able, under pressure from the user on the push button in the direction of the instrument, to move apart radially the arms of the securing spring (5) to disengage the pins (28, 29) of the annular groove of the instrument
- the hollow spindle (8) is extended into the underface of the pinion (9) by a cylindrical sleeve (11) provided to cooperate classically with a roller or bearing,
**characterised in that**
- the hollow spindle (8) comprises above the pinion (9) a cylindrical lower part (12) towards the top of a central part (13) with a smaller diameter than the lower part and separated from the latter by a peripheral shoulder (14), then a cylindrical upper part (15) with a smaller diameter than the central part (14) and separated from the latter by a peripheral shoulder (16),
- the hollow spindle comprises at least one slot (20) on its upper and central parts, said slot diametrically traversing the upper part (15) and the central bore (17) and opening outwardly on each side, said slot extending downwards by two cutouts opening outwardly along an entire width of the central part (13), the cutouts having the same width as the slot and having a concavely curved profile (36),
- each arm of the spring comprises from the ring a central segment (24) or (25) inclined in the direction of the central spindle (10), terminated by an upper segment (26) or (27) parallel to said central axis (10), each segment being terminated by an internal slope (23) inclined by an angle (α) toward a top end thereof.

2. The device according to claim 1, **characterised in that** the securing arms are housed in the slots provided in the rotary spindle.

3. The device according to one of claims 1 to 2, **characterised in that** the hollow spindle has on its upper and central sections three or four radial slots distributed at 120° or at 90° respectively for cooperating with a spring comprising three or four arms respectively.

4. The device according to one of claims 1 to 3, **characterised in that** each upper segment (26) or (27) supports, in the direction of the central axis (10), a transverse pin (28) or (29) provided for snap-fitting into the annular groove (18) of the rod of the instrument and having a plane inclined by an angle (β) towards the bottom (37).

5. The device according to one of claims 1 to 4, **characterised in that** the push-button has a hat shape with a circular flat face (30) provided with an annular peripheral spindle skirt (31), the spindle skirt being bordered by a perpendicular collar (32) directed toward the axis (10) so as to attach for example underneath a roller (35) of the head (2) and form an upper axial abutment for the push-button.

## Patentansprüche

1. Vorrichtung zum Arretieren eines zahnmedizinischen Instrumentes mit einem Körper (1), der innenseitig Antriebsorgane und/oder Bewegungsvermittlungsorgane trägt, und mit einem Werkzeugträgerkopf (2), wobei die Vorrichtung eine Drehwelle (4), eine Arretierfeder (5) und eine Betätigungstaste (6) aufweist,
- wobei die Drehwelle (4) durch eine Hohlachse (8) gebildet ist, die dazu vorgesehen ist, mit den Bewegungsvermittlungsorganen des Handstückes in Eingriff zu kommen und die in Längsrichtung durch eine nach außen mündende mittige Ausnehmung (17) durchdrungen ist, die dazu vorgesehen ist, den Kopf eines Instrumentes aufzunehmen, wobei die Drehwelle (4) durch eine Hohlachse (8) gebildet ist, die rechtwinklig zu ihrer Mittelachse (10) ein Zahnrad (9) trägt, das dazu vorgesehen ist, in herkömmlicher Art und Weise mit den Bewegungsvermittlungsorganen des Handstückes in Eingriff zu kommen,
- wobei die Arretierfeder (5) durch einen fußseitigen Finger (21) gebildet ist, der um die Hohlachse herum angeordnet und auf der gleichen Seite durch zwei elastische Arme oder eine Anzahl von elastischen Armen verlängert ist, von denen jeder mit einem Zapfen versehen ist und von denen jeder eine Ruhestellung, in der der Zapfen mit einer ringförmigen Nut (20), die an dem Instrumentenkopf vorgesehen ist, in Eingriff ist, und eine Abstandstellung aufweist, in der der Zapfen angesichts der Freigabe in einem Abstand von der Mittelachse angeordnet ist,
- wobei die Betätigungstaste (6) in Gestalt einer Kappe an der Unterseite einen mittigen und konischen Druckkopf (33) aufweist, dessen außenseitige Schräge dazu eingerichtet ist, bei Ausüben eines Druckes durch den Benutzer auf die Betätigungstaste in Richtung des Instrumentes die Arme der Arretierfeder (5) zum Freigeben der Zapfen (28, 29) von der ringförmigen Nut des Instruments zu beabstanden,
- wobei die Hohlachse (8) an der Unterseite des Zahnrades (9) durch eine zylindrische Muffe (11) verlängert ist, die dazu vorgesehen ist, in herkömmlicher Art und Weise mit einem Radlager oder mit einem Wellenlager zusammen zu wirken,
**dadurch gekennzeichnet, dass**
- die Hohlachse (8) oberhalb des Zahnrades (9) einen fußseitigen zylindrischen Abschnitt (12) aufweist, der in wegweisender Richtung von einem mittigen Abschnitt (13) mit einem geringeren Durchmesser als der fußseitige Abschnitt gefolgt sowie von diesem durch eine umfänglich umlaufende Schulter (14) getrennt und schließlich von einem kopfseitigen zylindrischen Abschnitt (15) mit einem geringeren Durchmesser als der mittige Abschnitt (14) sowie von diesem durch eine umfänglich umlaufende Schulter (16) getrennt gefolgt ist,
- die Hohlachse an ihren kopfseitigen und mittigen Abschnitten wenigstens einen Schlitz (20) aufweist, wobei der Schlitz diametral den kopfseitigen Abschnitt (15) sowie die mittige Ausnehmung (17) quert und auf jeder Seite nach außen mündet, wobei der Schlitz in Richtung des Fußes durch zwei Ausnehmungen verlängert ist, die über die gesamte Abmessung des mittigen Abschnittes (13) nach außen münden, wobei die Ausnehmungen die gleiche Breite wie der Schlitz aufweisen und über ein tailliertes konkaves Profil (36) verfügen, und
- wobei jeder Arm der Feder ausgehend von dem Ring ein mittiges Segment (24) oder (25) trägt, das in Richtung der Mittelachse (10) geneigt und durch ein deckseitiges Segment (26) oder (27) abgeschlossen ist, das parallel zu der Achse (10) liegt und jeweils durch eine innenseitige Schräge (23) abgeschlossen ist, die in kopfseitiger Richtung mit einem Winkel (α) geneigt ist.

2. Vorrichtung nach Anspruch 1, **dadurch gekennzeichnet, dass** die Arretierarme in den in der Drehwelle ausgebildeten Schlitzen angeordnet sind.

3. Vorrichtung nach einem der Ansprüche 1 bis 2, **dadurch gekennzeichnet, dass** die Hohlachse an ihren kopfseitigen und mittigen Abschnitten drei oder vier radiale Schlitze aufweist, die jeweils in einem Winkel von 120° oder 90° angeordnet sind, um mit einer drei beziehungsweise vier Arme aufweisenden Feder zusammen zu wirken.

4. Vorrichtung nach einem der Ansprüche 1 bis 3, **dadurch gekennzeichnet, dass** jedes obere Segment (26) oder (27) in Richtung der Mittelachse (10) einen Querzapfen (28) oder (29) trägt, der dazu vorgesehen ist, in der ringförmigen Nut (18) des Instrumentenschaftes einzurasten, und der eine Fläche aufweist, die in Richtung des Fußes (37) mit einem Winkel (β) geneigt ist.

5. Vorrichtung nach einem der Ansprüche 1 bis 4, **dadurch gekennzeichnet, dass** die Betätigungstaste eine hutartige Gestalt mit einer kreisförmigen planen Fläche (30) aufweist, die mit einer umfänglich umlaufenden ringförmigen Achsenschürze (31) ausgebildet ist, welche durch einen Kragen (32) begrenzt ist, der rechtwinklig zu der Achse (10) ausgerichtet ist, um beispielsweise unterhalb eines Radlagers (35) des Kopfes (2) einzurasten und für die Betätigungstaste als kopfseitiger axialer Anschlag zu dienen.
